# EUROPEAN PATENT APPLICATION

(11) **EP 1 377 053 A1**
(43) Date of publication of application: **02.01.2004**
(21) Application number: 02743706.0
(22) Date of filing: 24.06.2002
(51) Int. Cl.: H04N 5/92, G11B 20/12

(54) **VIDEO RECORDING APPARATUS AND RECORDING METHOD**

(30) Priority: 22.06.2001 JP 2001190100
(71) Applicant: MATSUSHITA ELECTRIC INDUSTRIAL CO., LTD., Kadoma-shi, Osaka 571-8501 (JP)
(72) Inventor: OHIRO, Toshihisa, Saijo-shi, Ehime 793-0044 (JP); KAMEYAMA, Koichi, Nihama-shi, Ehime 792-0060 (JP)
(74) Representative: Balsters, Robert
(86) International application number: PCT/JP2002/006302
(87) International publication number: WO 2003/001802

(57) **Abstract**

A system management control unit (108) for controlling a switching unit (107) is provided, and a data format to be employed when recording data on a recording medium is switched between a program stream and a transport stream according to the state of a system, whereby the capacity of the recording medium can be efficiently utilized, and the characteristics of multiple channels in digital broadcasting can be maintained.

## Description

### TECHNICAL FIELD

The present invention relates to an apparatus and a method for performing recording or reproduction by using a random-accessible disk recording medium, amid mixing of analog broadcasting and digital broadcasting and, more particularly, to an apparatus and a method for recording data of different data formats on the recording medium.

### BACKGROUND ART

Conventionally, there are two types of MPEG streams, i.e., a program stream (PS) which is employed in a storage system such as a DVD, and a transport stream (TS) which is employed in a digital broadcasting system. Accordingly, by taking advantage of such characteristics, the program stream is widely employed in storage-system devices while the transport stream is widely employed in broadcasting-system devices. In a recording/reproduction system as disclosed in Japanese Published Patent Application No. Hei.11-45512, when data are recorded on a recording medium in the form of a transport stream, the recording is consistently performed in the transport stream, and when data are recorded on a recording medium in the form of a program stream, the recording is consistently performed in the program stream.

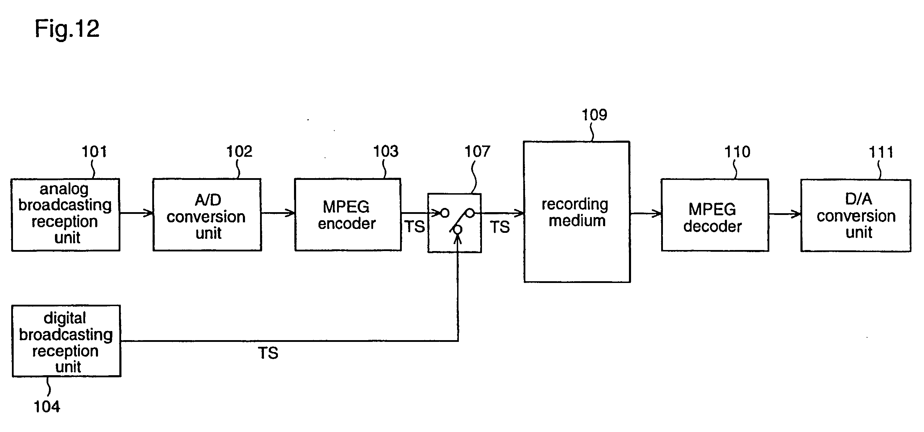

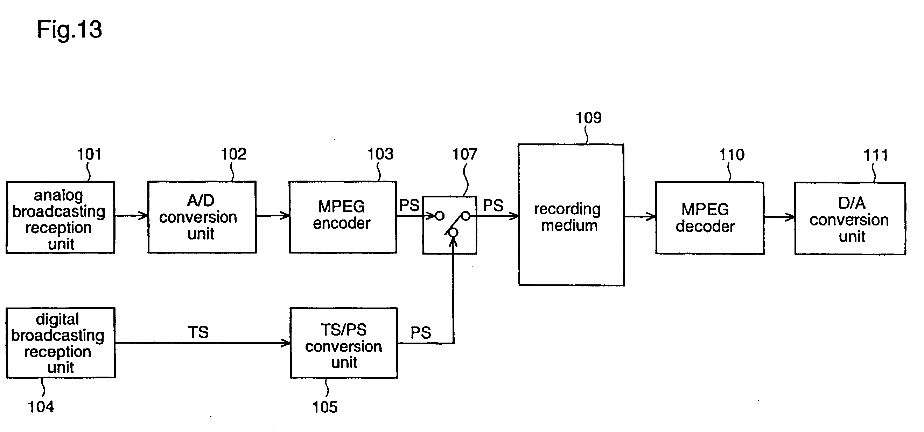

Hereinafter, the construction and operation of the prior art will be described with reference to figures 12 and 13.

Figure 12 shows a case where only a transport stream is employed in a system amid mixing of analog broadcasting and digital broadcasting. An analog broadcasting reception unit 101 receives analog broadcasting, an A/D conversion unit 102 converts the analog signal into a digital signal, and an MPEG encoder 103 converts the digital signal into a transport stream. A digital broadcasting reception unit 104 receives digital broadcasting. A switching unit 107 selects either the analog broadcasting or the digital broadcasting to be recorded on the recording medium 109, and the selected broadcasting is recorded on the recording medium 109. An MPEG decoder 110 performs MPEG decoding on the data from the recording medium 109, and a D/A conversion unit 111 converts the decoded data into an analog signal and reproduces the analog signal.

Figure 13 shows a case where only a program stream is employed in a system. An analog broadcasting reception unit 101 receives analog broadcasting, an A/D conversion unit 102 converts the analog signal into a digital signal, and an MPEG encoder 103 converts the digital signal into a program stream. A digital broadcasting reception unit 104 receives digital broadcasting, and a TS/PS conversion unit 105 converts a transport stream into a program stream. A switching unit 107 selects either the analog broadcasting or the digital broadcasting to be recorded on the recording medium 109, and the selected broadcasting is recorded on the recording medium 109. An MPEG decoder 110 performs MPEG decoding on the data from the recording medium 109, and a D/A conversion unit 111 converts the decoded data into an analog signal and reproduces the analog signal.

While the digital broadcasting is transmitted in a transport stream amid mixing of the digital broadcasting and the analog broadcasting, the transport stream is employed as multi-channel-multiplexed data and, thus, has a considerably large amount of data as compared with a program stream. Therefore, when data are recorded on a recording medium in only a transport stream, data on an unintended channel is also recorded, resulting in a waste of the capacity of the recording medium. On the other hand, when data are recorded on a recording medium in only a program stream, only one program can be recorded despite the fact that the transport stream is multiplexed and multi-channel-transmitted.

The present invention is made to solve the above-described problems and has for its object to provide an apparatus and a method for recording video, which effectively utilize the recording capacity, and maintain the characteristics of multiple channels in a transport stream that is transmitted by digital broadcasting.

### DISCLOSURE OF THE INVENTION

According to the present invention, there is provided a video recording apparatus for recording digital broadcasting and analog broadcasting mixedly on a single or plural recording media, which apparatus comprises: a data format selection means for selecting either a data format for a transport stream (TS) or a data format for a program stream (PS) in an MPEG system, on the basis of the state of a system; and a system management control means for managing and controlling the state of the system; and recording is performed in the selected data format. Since the data format is switched between the program stream and the transport stream on the basis of the state of the system, the capacity of the recording medium can be efficiently utilized, and the characteristics of multiple channels in digital broadcasting can be maintained.

According to the present invention, in the above-described video recording apparatus, there are provided a temporary recording mode and a storage recording mode as states of the system; and the data format selection means selects the transport stream when the state of the system is the temporary recording mode, while selecting the program stream when the state of the system is the storage recording mode, thereby to perform recording. Since the data format for recording is selected on the basis of the recording mode, information of multiple channels can be temporarily viewed, and only desired information can be stored, whereby the capacity of the recording medium is efficiently utilized.

According to the present invention, the above-described video recording apparatus includes a means which enables a user to select data formats with which data are recorded on the recording medium, in the temporary recording mode and the storage recording mode, respectively. Since the user selects the data format for recording on the basis of the recording mode, the user can temporarily view information of multiple channels, and store only information he/she desires, whereby the capacity of the recording medium is efficiently utilized.

According to the present invention, in the above-described video recording apparatus, the system management control means manages a free space on the recording medium as a state of the system, and the data format selection means selects the transport stream when the free space is large, while selecting the program stream when the free space is small, thereby to perform recording. Since the data format for recording is selected on the basis of the free space on the recording medium, the capacity of the recording medium can be efficiently utilized, and the characteristics of multiple channels in digital broadcasting can be maintained.

According to the present invention, the above-described video recording apparatus includes a means which enables a user to set a free space on the recording medium, with which the transport stream should be switched to the program stream. Since the data format for recording is selected on the basis of the free space set by the user, the capacity of the recording medium can be efficiently utilized, and the characteristics of multiple channels in digital broadcasting can be maintained.

According to the present invention, the above-described video recording apparatus includes a data amount reduction means for thinning information of multiple channels which are included in the transport stream; and a system management means for managing the capacity of the recording medium and controlling the data amount reduction means; and, when the free space left on the recording medium becomes small, the multi-channel information is thinned, thereby to perform recording. Since information of multiple channels is thinned on the basis of the free space of the recording medium before it is recorded, the capacity of the recording medium can be efficiently utilized, and the characteristics of multiple channels in digital broadcasting can be maintained.

According to the present invention, the above-described video recording apparatus includes a means which enables a user to set a free space on the recording medium, with which the multi-channel information should be thinned. Since information of multiple channels is thinned on the basis of the free space set by the user before it is recorded, the capacity of the recording medium can be efficiently utilized, and the characteristics of multiple channels in digital broadcasting can be maintained.

According to the present invention, the above-described video recording apparatus includes a user data management means for recording and creating viewing frequency genre information of a user; a data amount reduction means for thinning information of multiple channels which are included in the transport stream; and a system management means for managing the capacity of the recording medium and controlling the data amount reduction means; and, when the recordable space left becomes small, data which is obtained by removing a channel of a genre having a low frequency of viewing from the multi-channel information is recorded. Since data which is obtained by removing information of a channel having a low frequency of viewing from information of multiple channels is recorded, the capacity of the recording medium can be efficiently utilized, and the characteristics of multiple channels in digital broadcasting can be maintained.

According to the present invention, the above-described video recording apparatus includes a recording means for recording information indicating whether the data format is the transport stream or the program stream in a recording area different from an area in which video data are recorded, when recording the both streams mixedly. Since information indicating the data format is recorded on the recording medium, the data reproduction process is simplified, whereby the load on CPU during reproduction can be reduced, and the system can be efficiently operated.

According to the present invention, the above-described video recording apparatus includes a recording means for recording data in a recording area on the recording medium which is divided into areas for the respective data formats, when recording the transport stream and the program stream mixedly. Since data are recorded in the recording area of the recording medium which is divided into plural areas corresponding to the respective data formats, the data reproduction process is simplified, whereby the load on CPU during reproduction can be reduced, and the system can be efficiently operated.

According to the present invention, the above-described video recording apparatus includes a means which enables a user to set the size of the recording area for each data format. Since the user can set the capacity of the recording area for each data format, the system can be efficiently operated, and the recording area can be efficiently utilized.

According to the present invention, the above-described video recording apparatus includes a recording means for recording data in an area for storage recording and an area for temporary recording, which are obtained by further dividing each recording area corresponding to each data format. Therefore, the process of reproducing the temporarily recorded data and the stored data can be simplified, whereby the load on CPU during reproduction can be reduced, and the system can be efficiently operated.

According to the present invention, the above-described video recording apparatus includes a recording means for dividing a recording area on the recording medium into areas for the respective data formats so that the size of the recording area corresponding to each data format can be varied on the basis of the state of the system, when recording the transport stream and the program stream mixedly. Since the size of the recording area corresponding to each data format is variable, the system can be efficiently operated, and the capacity of the recording medium can be efficiently utilized.

According to the present invention, the above-described video recording apparatus includes a means which enables a user to set the size of the recording area corresponding to each data format. Since the user can vary the recording area corresponding to each data format, the system can be efficiently operated, and the capacity of the recording medium can be efficiently utilized.

According to the present invention, the above-described video recording apparatus includes a means for automatically changing the size of the recording area for each data format on the basis of the data amount. Therefore, the system can be efficiently operated, and the capacity of the recording medium can be efficiently utilized.

According to the present invention, there is provided a video recording method for recording digital broadcasting and analog broadcasting mixedly on a single or plural recording media, wherein a data format with which data are recorded on the recording medium is selected on the basis of the state of a system. Since the data format is changed on the basis of the state of the system, the capacity of the recording medium can be efficiently utilized, and the characteristics of multiple channels in digital broadcasting can be maintained.

According to the present invention, in the above-described video recording method, the data format for recording is either a transport stream (TS) or a program stream (PS) in an MPEG system. Since the data format is switched between the program stream and the transport stream on the basis of the state of the system, the capacity of the recording medium can be efficiently utilized, and the characteristics of multiple channels in digital broadcasting can be maintained.

According to the present invention, in the above-described video recording method, when recording is performed in either a temporary recording mode or a storage recording mode as a state of the system, a data format with which data are recorded on the recording medium is selected on the basis of the recording mode. Since the data format for recording is selected on the basis of the recording mode, information of multiple channels can be temporarily viewed, and only desired information can be stored, whereby the recording capacity is efficiently utilized.

According to the present invention, in the above-described video recording method, the data format for recording is either a transport stream (TS) or a program stream (PS) in an MPEG system; and the transport stream is recorded in the temporary recording mode, while the program stream is recorded in the storage recording mode. Since the data format for recording is selected on the basis of the recording mode, information of multiple channels can be temporarily viewed, and only desired information can be stored, whereby the recording capacity is efficiently utilized.

According to the present invention, in the above-described video recording method, a user can select data formats with which data are recorded on the recording medium in the temporary recording mode and the storage recording mode, respectively. Since the user selects the data format for recording on the basis of the recording mode, the user can temporarily view information of multiple channels, and store only information he/she desires, whereby the capacity of the recording medium is efficiently utilized.

According to the present invention, in the above-described video recording method, a data format for recording is selected on the basis of a free space on the recording medium as a state of the system. Since the data format for recording is selected on the basis of the free space on the recording medium, the capacity of the recording medium can be efficiently utilized, and the characteristics of multiple channels in digital broadcasting can be maintained.

According to the present invention, in the above-described video recording method, the data format for recording is either a transport stream (TS) or a program stream (PS) in an MPEG system; and the transport stream is recorded when the recordable free space on the recording medium is large, while the program stream is recorded when the recordable free space on the recording medium is small. Since the data format for recording is selected on the basis of the free space on the recording medium, the capacity of the recording medium can be efficiently utilized, and the characteristics of multiple channels in digital broadcasting can be maintained.

According to the present invention, in the above-described video recording method, a user sets a free space on the recording medium, at which the data format for recording should be switched. Since the data format for recording is selected on the basis of the free space set by the user, the capacity of the recording medium can be efficiently utilized, and the characteristics of multiple channels in digital broadcasting can be maintained.

According to the present invention, in the above-described video recording method, the data format for recording includes a transport stream (TS) in an MPEG system; and information of multiple channels included in the transport stream is thinned on the basis of the state of the system, thereby to perform recording. Since information of multiple channels is thinned on the basis of the state of the system before it is recorded, the capacity of the recording medium can be efficiently utilized, and the characteristics of multiple channels in digital broadcasting can be maintained.

According to the present invention, in the above-described video recording method, a free space on the recording medium is managed as a state of the system, and the multi-channel information is thinned when the recordable free space becomes small, thereby to perform recording. Since information of multiple channels is thinned on the basis of the free space of the recording medium before it is recorded, the capacity of the recording medium can be efficiently utilized, and the characteristics of multiple channels in digital broadcasting can be maintained.

According to the present invention, in the above-described video recording method, a user sets a free space on the recording medium, at which the multi-channel information should be thinned. Since information of multiple channels is thinned on the basis of the free space set by the user before it is recorded, the capacity of the recording medium can be efficiently utilized, and the characteristics of multiple channels in digital broadcasting can be maintained.

According to the present invention, in the above-described video recording method, the data format for recording includes a transport stream (TS) in an MPEG system; viewing frequency genre information of a user is created; and data which is obtained by removing a channel of a genre having a low frequency of viewing from information of multiple channels of the transport stream on the basis of the viewing frequency genre information, is recorded. Since data which is obtained by removing information of a channel having a low frequency of viewing from information of multiple channels is recorded, the capacity of the recording medium can be efficiently utilized, and the characteristics of multiple channels in digital broadcasting can be maintained.

According to the present invention, in the above-described video recording method, information of a genre which is frequently accessed by a user is recorded, and the viewing frequency genre information of the user is obtained from the recorded information. Therefore, information of a channel having a low frequency of viewing is removed from information of multiple channels on the basis of the obtained genre information, whereby the capacity of the recording medium can be efficiently utilized, and the characteristics of multiple channels in digital broadcasting can be maintained.

According to the present invention, in the above-described video recording method, when recording the transport stream and the program stream mixedly, information indicating whether the data format is the transport stream or the program stream is recorded. Since information indicating the data format is recorded on the recording medium, the data reproduction process is simplified, whereby the load on CPU during reproduction can be reduced, and the system can be efficiently operated.

According to the present invention, in the above-described video recording method, the information indicating the data format is recorded in a recording area on the recording medium that is different from a recording area in which video data are recorded. Since information indicating the data format is recorded in an area different from the video data area, the data reproduction process is simplified, whereby the load on CPU during reproduction can be reduced, and the system can be efficiently operated.

According to the present invention, in the above-described video recording method, when reproducing the recorded video data, a data format is selected on the basis of the information indicating the data format, and the video data is reproduced in the data format. Therefore, the data reproduction process is simplified, whereby the load on CPU during reproduction can be reduced, and the system can be efficiently operated.

According to the present invention, in the above-described video recording method, when recording the transport stream and the program stream mixedly, a recording area on the recording medium is divided into areas for the respective data formats. Since data are recorded in the recording area of the recording medium which is divided into plural areas corresponding to the respective data formats, the data reproduction process is simplified, whereby the load on CPU during reproduction can be reduced, and the system can be efficiently operated.

According to the present invention, in the above-described video recording method, a user sets the size of the recording area for each data format on the recording medium. Since the user can set the capacity of the recording area corresponding to each data format, the system can be efficiently operated, and the recording area can be efficiently utilized.

According to the present invention, in the above-described video recording method, each of the divided recording areas is further divided into a storage recording area and a temporary recording area. Therefore, the process of reproducing the temporarily recorded data and the stored data can be simplified, whereby the load on CPU during reproduction can be reduced, and the system can be efficiently operated.

According to the present invention, in the above-described video recording method, when recording the transport stream and the program stream mixedly, a recording area on the recording medium is divided into areas for the respective data formats, and the size of the recording area for each data format is variable on the basis of the state of the system. Since the size of the recording area corresponding to each data format is variable, the system can be efficiently operated, and the capacity of the recording medium can be efficiently utilized.

According to the present invention, in the above-described video recording method, a user can set the size of the recording area for each data format on the recording medium. Therefore, the system can be efficiently operated, and the capacity of the recording medium can be efficiently utilized by changing the recording area according to the user setting.

According to the present invention, in the above-described video recording method, the size of the recording area for each data format is automatically changed according to the data amount. Therefore, the system can be efficiently operated, and the capacity of the recording medium can be efficiently utilized.

### BRIEF DESCRIPTION OF DRAWINGS

Figure 1 is a block diagram illustrating the construction of a video recording apparatus according to a first embodiment of the present invention. Figure 2 is a flowchart illustrating a video recording method according to a second embodiment of the present invention. Figure 3 is a diagram illustrating a video recording method according to a third embodiment of the present invention. Figure 4 is a flowchart illustrating the video recording method according to the third embodiment of the invention. Figure 5 is a block diagram illustrating the construction of a video recording apparatus according to a fourth embodiment of the present invention. Figure 6 is a flowchart illustrating a video recording method according to the fourth embodiment of the invention. Figure 7 is a block diagram illustrating the construction of a video recording apparatus according to a fifth embodiment of the present invention. Figure 8 is a flowchart illustrating a video recording method according to the fifth embodiment of the invention. Figure 9 is a diagram illustrating an apparatus and a method for recording a video according to a sixth embodiment of the present invention. Figure 10 is a diagram illustrating an apparatus and a method for recording a video according to a seventh embodiment of the present invention. Figure 11 is a diagram illustrating an apparatus and a method for recording a video according to an eighth embodiment of the present invention.

Further, figure 12 is a block diagram illustrating a conventional video recording apparatus which deals only with a transport stream. Figure 13 is a block diagram illustrating a conventional video recording apparatus which deals only with a program stream.

### BEST MODE TO EXECUTE THE INVENTION

The present invention will be described in more detail with reference to the attached drawings.

### (Embodiment 1)

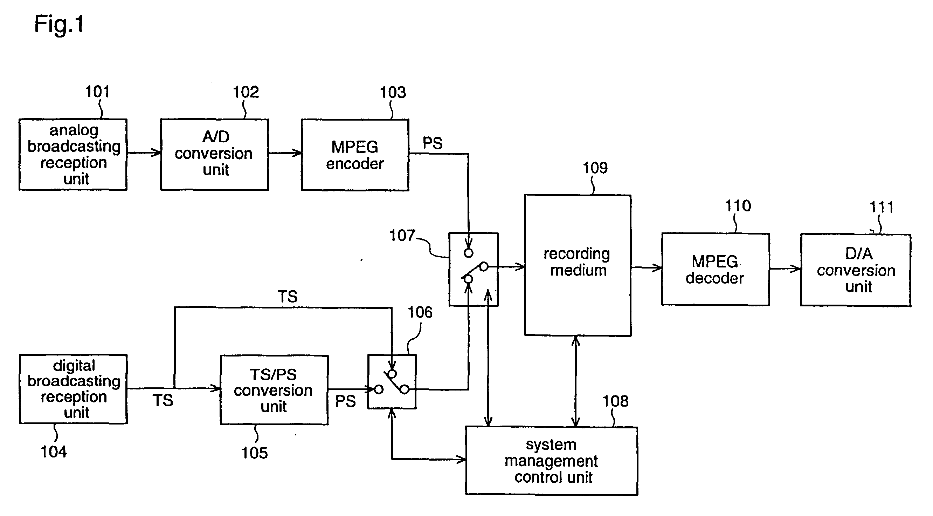

Figure 1 is a block diagram of a video recording apparatus according to a first embodiment of the present invention.

In figure 1, the video recording apparatus comprises an analog broadcasting reception unit 101 for receiving analog broadcasting; an A/D conversion unit 102 for converting the analog signal received by the analog broadcasting reception unit 101 into a digital signal; an MPEG encoder 103 for converting the digital signal obtained by the A/D conversion unit 102 into a program stream as an MPEG stream; a digital broadcasting reception unit 104 for receiving digital broadcasting; a TS/PS conversion unit 105 for converting a transport stream (TS) which is a data format to be transmitted by digital broadcasting, into a program stream; a switching unit 106 for selecting either the signal of the transport stream received by the digital broadcasting reception unit 104 or the signal obtained by converting the transport stream into the program stream (PS) by the TS/PS conversion unit; a switching unit 107 for selecting either the data obtained by MPEG-encoding the analog broadcasting or the output from the switching unit 106; a recording medium 109 on which the data selected by the switching unit 107 are recorded; a system management control unit 108 for managing the capacity or the like of the recording medium 109, and controlling the switching unit 106 and the switching unit 107; an MPEG decoder 110 for performing MPEG decoding on the data recorded on the recording medium 109; and a D/A conversion unit 111 for converting the MPEG-decoded digital signal into an analog signal, and reproducing the analog signal.

Initially, the user selects either digital broadcasting or analog broadcasting as broadcasting to be recorded on the recording medium 109. When the user selects analog broadcasting, the analog broadcasting reception unit 101 performs reception, the A/D conversion unit 102 converts the received signal into a digital signal, and the MPEG encoder 103 converts the digital signal into a program stream. Since the user decides to record analog broadcasting on the recording medium 9, the switching unit 107 selects the analog broadcasting side, thereby recording the analog broadcasting on the recording medium 109. On the other hand, when the user selects digital broadcasting, the digital broadcasting reception unit 104 receives digital broadcasting. A data format of the received digital broadcasting is a transport stream, and the transport stream is inputted to the TS/PS conversion unit 105 and, further, it is directly inputted to the switching unit 106. When the system management control unit 108 judges that the data format with which data are recorded on the recording medium 109 is a transport stream, the switching unit 106 selects the digital broadcasting reception side, and outputs the transport stream to the switching unit 107. When the system management control unit 108 judges that the data format with which data are recorded on the recording medium 109 is a program stream, the switching unit 106 selects the TS/PS conversion unit output side, and outputs the program stream to the switching unit 107. Since the user decides to record digital broadcasting on the recording medium 109, the switching unit 107 selects the digital broadcasting side, thereby recording the digital broadcasting on the recording medium 109. In reproduction, the MPEG decoder 110 performs MPEG decoding on the data recorded on the recording medium 109, and the D/A conversion unit 111 converts the output of the MPEG decoder 110 into an analog signal and reproduces the analog signal.

As described above, according to the first embodiment, in order to take advantages of the characteristics of the respective data formats, i.e., the program stream which is employed in a storage system such as a DVD, and the transport stream which is subjected to multi-channel transmission and is employed for processing in a digital broadcasting system, the video recording apparatus is provided with the switching units 106 and 107 for selecting the data formats on the basis of the state of the system, and the system management control unit 108 for managing the state of the system and controlling the system. Therefore, the capacity of the recording medium can be efficiently utilized, and the characteristics of multiple channels in digital broadcasting can be maintained.

### (Embodiment 2)

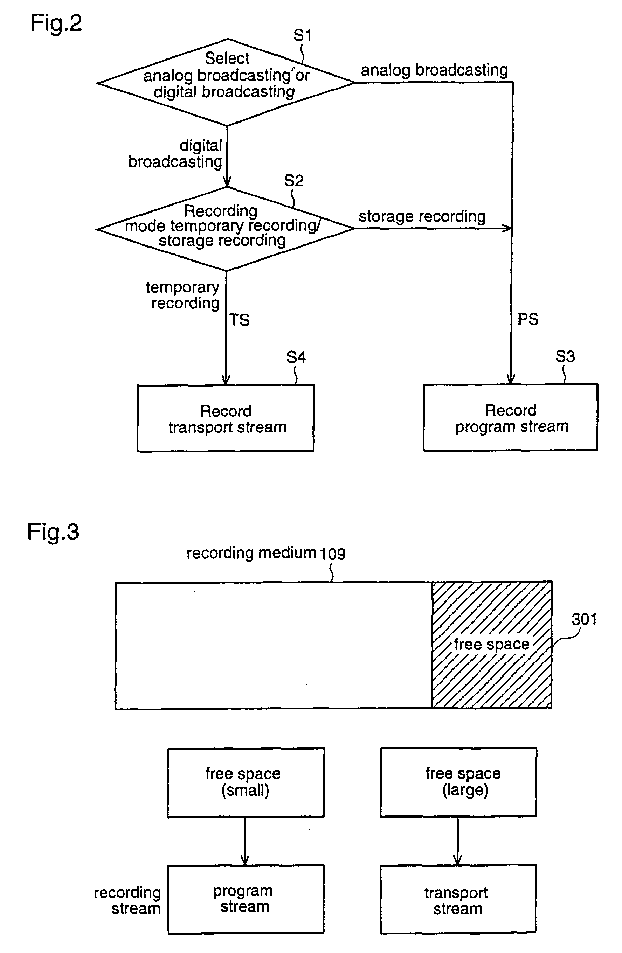

Figure 2 is a flowchart of a video recording method according to a second embodiment of the present invention. The same constituents as those shown in the first embodiment are assigned the same reference numerals, and descriptions thereof will be omitted.

Initially, in a system which receives both of digital broadcasting and analog broadcasting and records data on a recording medium, when the user decides to record analog broadcasting on a recording medium 109 (step S1), the analog broadcasting is recorded on the recording medium 109 in the form of a program stream (step S3). On the other hand, when the user decides to record digital broadcasting on the recording medium 109 (step S1) and selects a storage recording mode (step S2), the digital broadcasting is recorded on the recording medium 109 in the form of a program stream (step S3). Further, when the user decides to record digital broadcasting on the recording medium 109 (step S1) and selects a temporary recording mode (step S2), the digital broadcasting is recorded on the recording medium 109 in the form of a transport stream (step S4).

This signal flow will be described with reference to figure 1.

When the user decides to record analog broadcasting on the recording medium 109, initially the analog broadcasting reception unit 101 receives analog broadcasting, and the A/D conversion unit 102 converts the analog broadcasting into a digital signal. The MPEG encoder 103 converts the digital signal obtained by the A/D conversion unit 102 into a program stream, and the program stream obtained by the MPEG encoder 103 is recorded on the recording medium 109. On the other hand, when the user decides to record digital broadcasting on the recording medium 109 and selects the storage recording mode, the digital broadcasting reception unit 104 receives digital broadcasting, and the TS/PS conversion unit 105 converts a transport stream into a program stream. The system management control unit 108 sets the switching unit 106 on the output side of the TS/PS conversion unit 105, and sets the switching unit 107 on the digital broadcasting reception side, thereby recording the program stream on the recording medium 109. When the user decides to record digital broadcasting on the recording medium 109 and selects the temporary recording mode, the digital broadcasting reception unit 104 receives digital broadcasting, and the system management control unit 108 sets the switching unit 106 on the output side of the digital broadcasting reception unit, and sets the switching unit 107 on the digital broadcasting reception side, thereby recording the transport stream on the recording medium 109.

As described above, according to the second embodiment, in order to perform efficient data recording amid mixing of analog broadcasting and digital broadcasting, the system management control unit 108 controls the switching units 106 and 107 so that data are recorded in the form of a transport stream having a relatively large amount of data in the case of temporary recording, and data are recorded in the form of a program stream having a relatively small amount of data in the case of storage recording. Therefore, the user can temporarily view information of multiple channels, and store only information of channels he/she desires, whereby the capacity of the recording medium is efficiently utilized.

### (Embodiment 3)

Figure 3 is a diagram illustrating a video recording method according to a third embodiment of the present invention. The same constituents as those shown in the first embodiment are assigned the same reference numerals, and descriptions thereof will be omitted.

In figure 3, numeral 301 denotes a free space as a recordable area on a recording medium 109.

In a system which receives both of digital broadcasting and analog broadcasting and records data on the recording medium 109, when the user decides to record analog broadcasting on the recording medium 109, analog broadcasting is recorded on the recording medium 109 in the form of a program stream. On the other hand, when the user decides to record digital broadcasting on the recording medium 109, digital broadcasting is recorded on the recording medium 109 in the form of a transport stream. When the system management control unit 108 confirms that the capacity of the free space 301 becomes small, the digital broadcasting is recorded on the recording medium 109 in the form of a program stream. The capacity of the recording medium 109 at which the data format for recording data on the recording medium 109 is changed from the transport stream to the program stream is set by the user.

This signal flow will be described with reference to figure 1.

When the user decides to record analog broadcasting on the recording medium 109, initially the analog broadcasting reception unit 101 receives analog broadcasting, and the A/D conversion unit 102 converts the analog broadcasting into a digital signal. The MPEG encoder 103 converts the digital signal obtained by the A/D conversion unit 102 into a program stream, and the program stream obtained by the MPEG encoder 103 is recorded on the recording medium 109. On the other hand, when the user decides to record digital broadcasting on the recording medium 109, the digital broadcasting reception unit 104 receives digital broadcasting, the system management control unit 108 sets the switching unit 106 on the output side of the digital broadcasting reception unit, and sets the switching unit 107 on the digital broadcasting reception side, whereby the transport stream is recorded on the recording medium 109. Here, when the system management control unit 108 confirms that the free space 301 on the recording medium 109 reaches the capacity set by the user, the digital broadcasting reception unit 104 receives digital broadcasting, and the TS/PS conversion unit 105 converts the transport stream into a program stream. The system management control unit 108 sets the switching unit 106 on the output side of the TS/PS conversion unit 105, and sets the switching unit 107 on the digital broadcasting reception side, whereby the program stream is recorded on the recording medium 109.

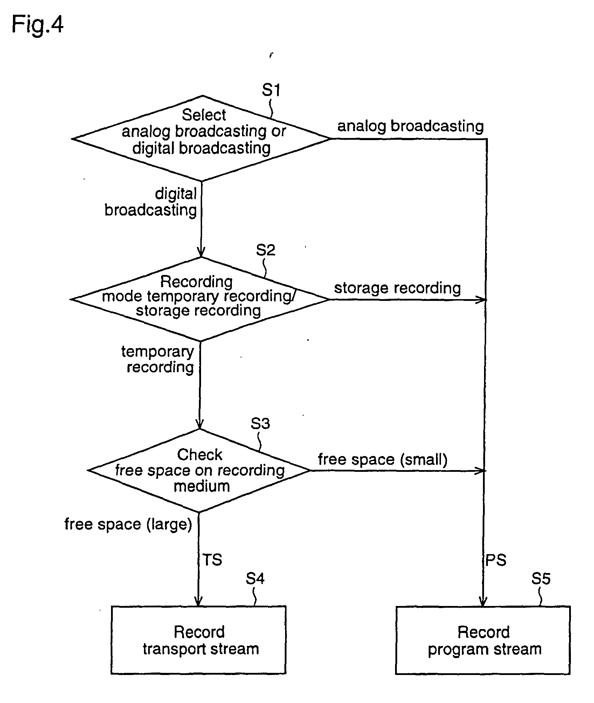

Figure 4 is a flowchart of the video recording method according to the third embodiment of the present invention.

Initially, in a system which receives both of digital broadcasting and analog broadcasting and records data on a recording medium, when the user decides to record analog broadcasting on a recording medium 109 (step S1), analog broadcasting is recorded on the recording medium 109 in the form of a program stream (step S5). On the other hand, when the user decides to record digital broadcasting on the recording medium 109 (step S1) and selects a storage recording mode (step S2), digital broadcasting is recorded on the recording medium 109 in the form of a program stream (step S5). Further, when the user decides to record digital broadcasting on the recording medium 109 (step S1) and selects a temporary recording mode (step S2) and, further, there is a large free space left on the recording medium (step S3), the digital broadcasting is recorded on the recording medium 109 in the form of a transport stream (step S4). When the user decides to record digital broadcasting on the recording medium 109 (step S1) and selects a temporary recording mode (step S2) and, further, the free space left on the recording medium becomes small (step S3), the digital broadcasting is recorded on the recording medium 109 in the form of a program stream (step S5).

As described above, according to the third embodiment, in order to take advantage of the characteristics of the respective data formats, i.e., the transport stream and the program stream, and to efficiently utilize the recording capacity, the system management control unit 108 manages the free space on the recording medium 109, and selects the data format for recording on the basis of the free space on the recording medium. Therefore, the recording capacity of the recording medium can be efficiently utilized, and the characteristics of multiple channels in digital broadcasting can be maintained.

### (Embodiment 4)

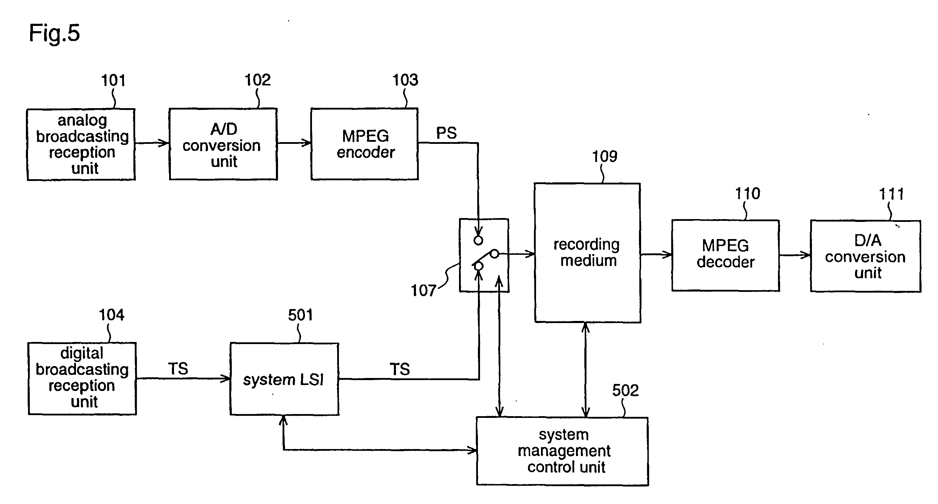

Figure 5 is a block diagram illustrating the construction of a video recording apparatus according to a fourth embodiment of the present invention. The same constituents as those shown in the above-described embodiments are assigned the same reference numerals, and descriptions thereof will be omitted.

In figure 5, a system LSI 501 thins data of a transport stream including multiple channels into several channels of data, and outputs the thinned data. A system state management unit 502 manages the capacity of the recording medium 109 and controls the system LSI 501. Here, the number of channels by which the transport stream is thinned is managed by the system state management unit 502 on the basis of the capacity of the recording medium 109.

In a system which receives both of digital broadcasting and analog broadcasting and records data on the recording medium 109, when the user decodes to record analog broadcasting on the recording medium 109, analog broadcasting is recorded on the recording medium 109 in the form of a program stream. On the other hand, when the user decides to record digital broadcasting on the recording medium 109, digital broadcasting is recorded on the recording medium 109 in the form of a transport stream including multiple channels. When the system state management unit 502 confirms that the capacity of the free space 301 becomes small, the system LSI 501 thins the transport stream including multiple channels into several channels of data, and the thinned data are recorded on the recording medium 109. The capacity of the recording medium 109 at which the transport stream is thinned is set by a user.

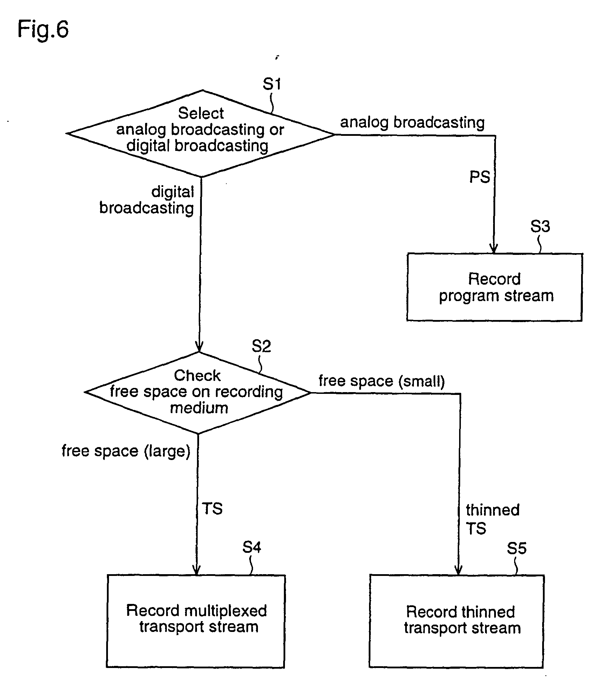

Figure 6 is a flowchart of a video recording method according to the fourth embodiment of the present invention.

Initially, in a system which receives both of digital broadcasting and analog broadcasting and records data on the recording medium, when the user decides to record analog broadcasting on the recording medium 109 (step S1), analog broadcasting is recorded on the recording medium 109 in the form of a program stream (step S3). On the other hand, when the user decides to record digital broadcasting on the recording medium 109 (step S1), the entire transport stream in which multiple channels are multiplexed, that is transmitted from the broadcast station side, is to be recorded on the recording medium 109. Here, a free space on the recording medium 109 is checked (step S2). When there is left a large free space, the entire multi-channel-multiplexed transport stream transmitted from the broadcast station side is recorded on the recording medium 109 as it is (step S4). On the other hand, when the left free space is small, the transport stream which is obtained by thinning the multi-channel-multiplexed transport stream is recorded on the recording medium 109 (step S5).

As described above, according to the fourth embodiment, when recording data in a transport stream, the system state management unit 502 manages the free space on the recording medium 109, and the system LSI 501 thins the multi-channel information on the basis of the free space, whereby the recording capacity of the recording medium can be efficiently utilized, and the characteristics of multiple channels in digital broadcasting can be maintained.

### (Embodiment 5)

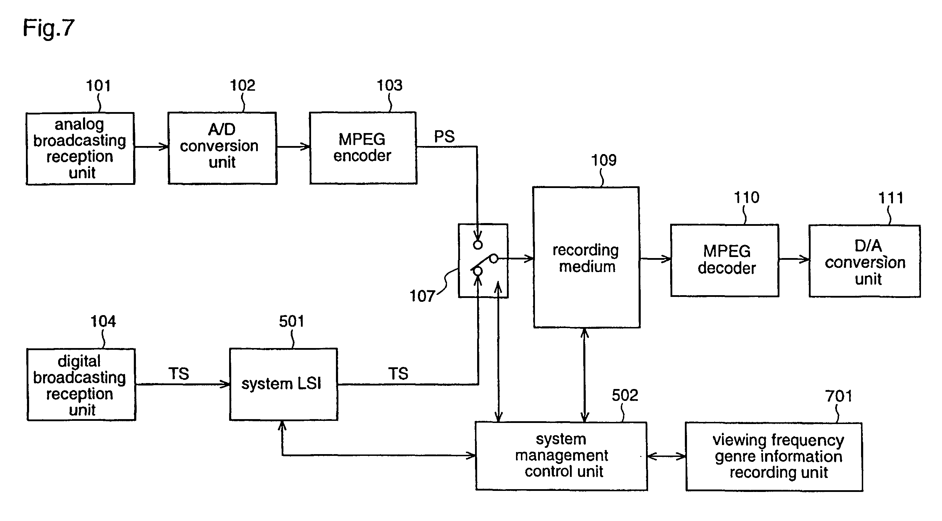

Figure 7 is a block diagram illustrating the construction of a video recording apparatus according to a fifth embodiment of the present invention. The same constituents as those shown in the first embodiment are assigned the same reference numerals, and descriptions thereof will be omitted.

In figure 7, a viewing frequency genre information recording unit 701 records a channel and a genre selected by the user through an EPG (Electronic Programming Guide), and records the number of times the user selects the channel and the genre.

In a system which receives both of digital broadcasting and analog broadcasting and records data on a recording medium 109, when the user decides to record analog broadcasting on the recording medium 109, analog broadcasting is recorded on the recording medium 109 in the form of a program stream. On the other hand, when the user decides to record digital broadcasting on the recording medium 109, digital broadcasting is recorded on the recording medium 109 in the form of a transport stream including multiple channels. When the system state management unit 502 confirms that the capacity of the free space 301 becomes small, the system LSI 501 thins the transport stream including multiple channels into several channels, and the thinned data are recorded on the recording medium 109. Here, the channel to be removed by the system LSI 501 is decided by the system state management unit 502 on the basis of the information of the channel and the genre selected by the user as well as the number of times the user selects the channel and the genre, which are recorded in the viewing frequency genre information recording unit 701. The system LSI 501 thins the multi-channel information of the transport stream on the basis of the information of the channels to be removed, and records the thinned data on the recording medium 109.

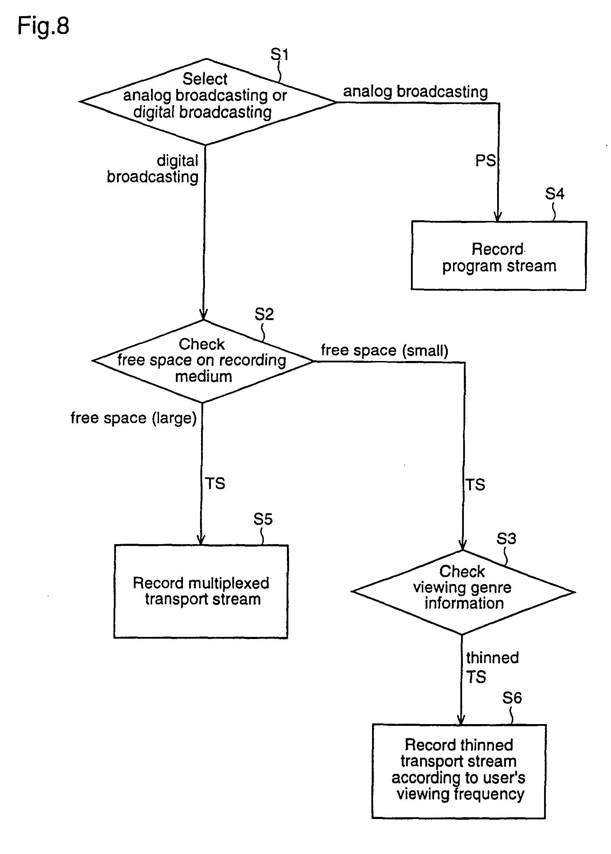

Figure 8 is a flowchart of a video recording method according to the fifth embodiment of the present invention.

Initially, in a system which receives both of digital broadcasting and analog broadcasting and records data on a recording medium, when the user decides to record analog broadcasting on the recording medium 109 (step S1), analog broadcasting is recorded on the recording medium 109 in the form of a program stream (step S4). On the other hand, when the user decides to record digital broadcasting on the recording medium 109 (step S1), the entire transport stream in which multiple channels are multiplexed, that is transmitted from the broadcast station side, is to be recorded on the recording medium 109. Here, a free space on the recording medium 109 is checked (step S2). When there is left a large free space, the entire multi-channel-multiplexed transport stream transmitted from the broadcast station side is recorded on the recording medium 109 as it is (step S5). On the other hand, when the free space is small, a channel and a genre which are frequently received by the user are checked (step S3). Then, data of the multi-channel-multiplexed transport stream is thinned so that the channel and the genre which are frequently received by the user are preferentially recorded on the recording medium 109, and the data is recorded on the recording medium 109 (step S6).

As described above, according to the fifth embodiment, when recording data in the form of a transport stream, the system LSI 501 removes information of channels having relatively low frequencies of viewing from multi-channel information on the basis of the free space on the recording medium 109 which is managed by the system state management unit 502, on the basis of the viewing frequency genre information obtained by the viewing frequency genre information recording unit 701. Therefore, the recording capacity of the recording medium can be efficiently utilized, and the characteristics of multiple channels in digital broadcasting can be maintained.

### (Embodiment 6)

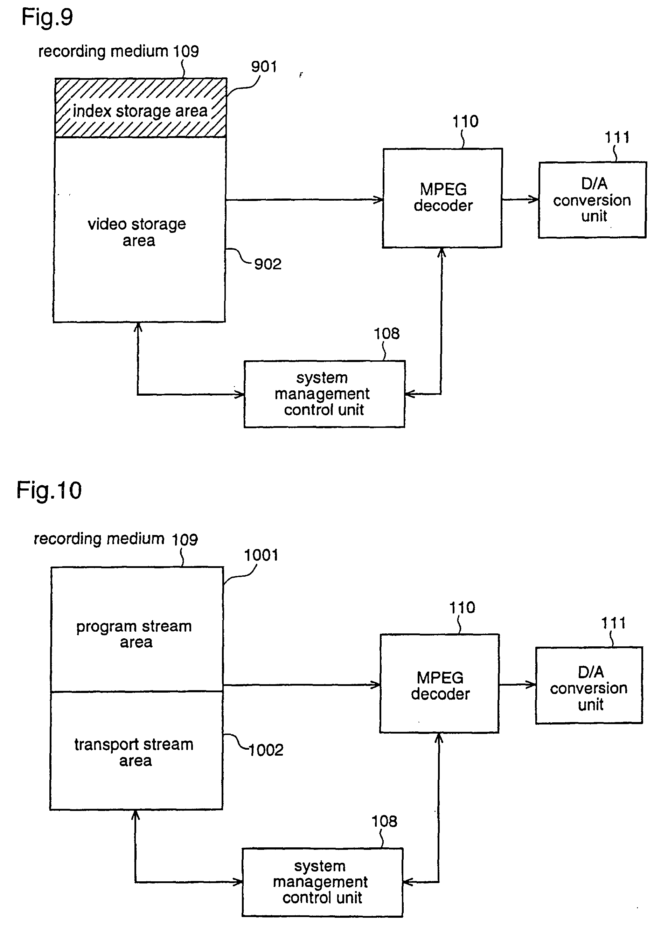

Figure 9 is a diagram illustrating an apparatus and a method for recording video according to a sixth embodiment of the present invention. The same constituents as those shown in the first embodiment are assigned the same reference numerals, and descriptions thereof will be omitted.

In figure 9, information for judging a data format of each data recorded in a video storage area 902 on a recording medium 109 is recorded in an index storage area 901.

When video data which are recorded on the recording medium 109 with a transport stream and a program stream being mixed are reproduced, the MPEG decoder 110 decodes MPEG data recorded on the recording medium 109. The D/A conversion unit 111 converts the video data outputted from the MPEG decoder 110 into an analog signal, and outputs the analog signal. When decoding the MPEG data, the MPEG decoder 110 has to recognize whether the inputted MPEG data is a program stream or a transport stream. Then, the system management control unit 108 recognizes the data format of the data that is currently outputted from the recording medium 109, on the basis of the information recorded in the index storage area 901 of the recording medium 109, and notifies the MPEG decoder 110 of the obtained data format.

As described above, according to the sixth embodiment, when recording data, information indicating the data format is recorded in the index storage area 901 to simplify the data reproduction process, whereby the load on the CPU during reproduction can be reduced, and the system can be efficiently operated.

### (Embodiment 7)

Figure 10 is a diagram illustrating an apparatus and a method for recording a video according to a seventh embodiment of the present invention. The same constituents as those shown in the first embodiment are assigned the same reference numerals, and descriptions thereof will be omitted.

When video data which are recorded on the recording medium 109 with a transport stream and a program stream being mixed are reproduced, the MPEG decoder 110 decodes MPEG data recorded on the recording medium 109. The D/A conversion unit 111 converts the video data outputted from the MPEG decoder 110 into an analog signal, and outputs the analog signal. When decoding the MPEG data, the MPEG decoder 110 has to recognize whether the inputted MPEG data is a program stream or a transport stream. So, an area on the recording medium 109 is divided into a program stream area 1001 in which a program stream is to be recorded and a transport stream area 1002 in which a transport stream is to be recorded. When recording an MPEG stream on the recording medium 109, the MPEG stream is recorded in the program stream area 1001 when it is a program stream, and the MPEG stream is recorded in the transport stream area 1002 when it is a transport area. When reproducing the MPEG stream, the system management control unit easily recognizes whether the stream being currently outputted from the MPEG decoder is a program stream or a transport stream, and notifies the MPEG decoder of the obtained stream. Here, the capacities of the program stream area 1001 and the transport stream area 1002 are decided by the user.

As described above, according to the seventh embodiment, since the recording area on the recording medium 109 is divided into the program stream area 1001 and the transport stream area 1002, the data reproduction process is simplified, whereby the load on the CPU during reproduction can be reduced, and the system can be efficiently operated.

### (Embodiment 8)

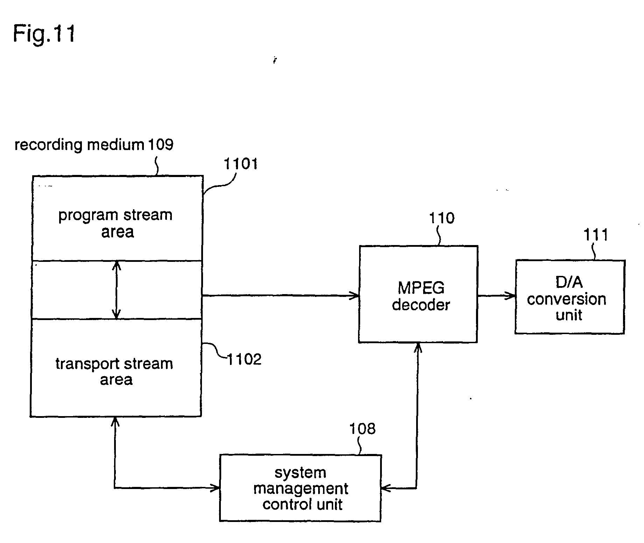

Figure 11 is a diagram illustrating an apparatus and a method for recording video according to an eighth embodiment of the present invention. The same constituents as those shown in the first embodiment are assigned the same reference numerals, and descriptions thereof will be omitted.

When a transport stream and a program stream are mixedly recorded and an area on a recording medium is divided into areas for the respective data formats, the capacities of a transport stream area 1101 and a program stream area 1102 can be automatically changed. For example, when the user frequently records data in the form of a transport stream, the capacity of the transport stream area 1102 can be automatically increased. On the other hand, when the user frequently records data in the form of a program stream, the capacity of the program stream area 1101 can be increased. Further, the user can determine the capacities.

As described above, according to the eighth embodiment, the program stream area 1101 and the transport stream area 1102 on the recording medium 109 are variable, and the respective areas are changed according to the state of recording data, whereby the system can be efficiently operated, and the recording capacity of the recording medium can be efficiently utilized.

### APPLICABILITY IN INDUSTRY

As described above, a video recording apparatus according to the present invention is valuable with respect to a DVD, a hard disk recorder, a set top box and the like, in which digital broadcasting and analog broadcasting can be mixedly recorded.

## Claims

1. A video recording apparatus for recording digital broadcasting and analog broadcasting mixedly on a single or plural recording media, comprising:
a data format selection means for selecting either a data format for a transport stream (TS) or a data format for a program stream (PS) in an MPEG system, on the basis of the state of a system; and
a system management control means for managing and controlling the state of the system;
wherein recording is performed in the selected data format.

2. The video recording apparatus as defined in Claim 1, wherein
there are provided a temporary recording mode and a storage recording mode as the states of the system; and
the data format selection means selects the transport stream when the state of the system is the temporary recording mode, while selecting the program stream when the state of the system is the storage recording mode, thereby to perform recording.

3. The video recording apparatus as defined in Claim 2, including:
a means which enables a user to select data formats with which data are recorded on the recording medium, in the temporary recording mode and the storage recording mode, respectively.

4. The video recording apparatus as defined in Claim 1, wherein
the system management control means manages a free space on the recording medium as a state of the system, and the data format selection means selects the transport stream when the free space is large, while selecting the program stream when the free space is small, thereby to perform recording.

5. The video recording apparatus as defined in Claim 4, including:
a means which enables a user to set a free space on the recording medium, with which the transport stream should be switched to the program stream.

6. The video recording apparatus as defined in Claim 1, including:
a data amount reduction means for thinning information of multiple channels which are included in the transport stream; and
a system management means for managing the capacity of the recording medium and controlling the data amount reduction means;
wherein, when the free space left on the recording medium becomes small, the multi-channel information is thinned, thereby to perform recording.

7. The video recording apparatus as defined in Claim 6, including:
a means which enables a user to set a free space on the recording medium, with which the multi-channel information should be thinned.

8. The video recording apparatus as defined in Claim 1, including:
a user data management means for recording and creating viewing frequency genre information of a user;
a data amount reduction means for thinning information of multiple channels which are included in the transport stream; and
a system management means for managing the capacity of the recording medium and controlling the data amount reduction means;
wherein, when the recordable space left becomes small, data which is obtained by removing a channel of a genre having a low frequency of viewing from the multi-channel information is recorded.

9. The video recording apparatus as defined in any of Claims 1 to 8, including:
a recording means for recording information indicating whether the data format is the transport stream or the program stream in a recording area different from an area in which video data are recorded, when recording the both streams mixedly.

10. The video recording apparatus as defined in any of Claims 1 to 8, including:
a recording means for recording data in a recording area on the recording medium which is divided into areas for the respective data formats, when recording the transport stream and the program stream mixedly.

11. The video recording apparatus as defined in Claim 10, including:
a means which enables a user to set the size of the recording area for each data format.

12. The video recording apparatus as defined in Claim 10, including:
a recording means for recording data in an area for storage recording and an area for temporary recording, which are obtained by further dividing each recording area corresponding to each data format.

13. The video recording apparatus as defined in any of Claims 1 to 8, including:
a recording means for dividing a recording area on the recording medium into areas for the respective data formats so that the size of the recording area corresponding to each data format can be varied on the basis of the state of the system, when recording the transport stream and the program stream mixedly.

14. The video recording apparatus as defined in Claim 13, including:
a means which enables a user to set the size of the recording area for each data format.

15. The video recording apparatus as defined in Claim 13, including:
a means for automatically changing the size of the recording area for each data format according to the data amount.

16. A video recording method for recording digital broadcasting and analog broadcasting mixedly on a single or plural recording media, wherein
a data format with which data are recorded on the recording medium is selected on the basis of the state of a system.

17. The video recording method as defined in Claim 16, wherein
the data format for recording is either a transport stream (TS) or a program stream (PS) in an MPEG system.

18. The video recording method as defined in Claim 16, wherein
when recording is performed in either a temporary recording mode or a storage recording mode as a state of the system, a data format with which data are recorded on the recording medium is selected on the basis of the recording mode.

19. The video recording method as defined in Claim 18, wherein
the data format for recording is either a transport stream (TS) or a program stream (PS) in an MPEG system; and
the transport stream is recorded in the temporary recording mode, while the program stream is recorded in the storage recording mode.

20. The video recording method as defined in Claim 18, wherein
a user can select data formats with which data are recorded on the recording medium in the temporary recording mode and the storage recording mode, respectively.

21. The video recording method as defined in Claim 16, wherein
a data format for recording is selected on the basis of a free space on the recording medium as a state of the system.

22. The video recording method as defined in Claim 21, wherein
the data format for recording is either a transport stream (TS) or a program stream (PS) in an MPEG system; and
the transport stream is recorded when the recordable free space on the recording medium is large, while the program stream is recorded when the recordable free space on the recording medium is small.

23. The video recording method as defined in Claim 21, wherein
a user sets a free space on the recording medium, with which the data format for recording should be switched.

24. The video recording method as defined in Claim 16, wherein
the data format for recording includes a transport stream (TS) in an MPEG system; and
information of multiple channels included in the transport stream is thinned on the basis of the state of the system, thereby to perform recording.

25. The video recording method as defined in Claim 24, wherein
a free space on the recording medium is managed as a state of the system, and the multi-channel information is thinned when the recordable free space becomes small, thereby to perform recording.

26. The video recording method as defined in Claim 24, wherein
a user sets a free space on the recording medium, with which the multi-channel information should be thinned.

27. The video recording method as defined in Claim 16, wherein
the data format for recording includes a transport stream (TS) in an MPEG system;
viewing frequency genre information of a user is created; and
data which is obtained by removing a channel of a genre having a low frequency of viewing from information of multiple channels of the transport stream on the basis of the viewing frequency genre information, is recorded.

28. The video recording method as defined in Claim 27, wherein
information of a genre which is frequently accessed by a user is recorded, and the viewing frequency genre information of the user is obtained from the recorded information.

29. The video recording method as defined in Claim 17, wherein
when recording the transport stream and the program stream mixedly, information indicating whether the data format is the transport stream or the program stream is recorded.

30. The video recording method as defined in Claim 29, wherein
the information indicating the data format is recorded in a recording area on the recording medium that is different from a recording area in which video data are recorded.

31. The video recording method as defined in Claim 29, wherein
when reproducing the recorded video data, a data format is selected on the basis of the information indicating the data format, and the video data is reproduced in the data format.

32. The video recording method as defined in Claim 17, wherein
when recording the transport stream and the program stream mixedly, a recording area on the recording medium is divided into areas for the respective data formats.

33. The video recording method as defined in Claim 32, wherein
a user sets the size of the recording area for each data format on the recording medium.

34. The video recording method as defined in Claim 32, wherein
each of the divided recording areas is further divided into a storage recording area and a temporary recording area.

35. The video recording method as defined in Claim 17, wherein
when recording the transport stream and the program stream mixedly, a recording area on the recording medium is divided into areas for the respective data formats, and the size of the recording area for each data format is variable according to the state of the system.

36. The video recording method as defined in Claim 35, wherein
a user can set the size of the recording area for each data format on the recording medium.

37. The video recording method as defined in Claim 35, wherein
the size of the recording area for each data format is automatically changed according to the data amount.
